Europäisches Patentamt

**European Patent Office**

Office européen des brevets

(11) Publication number: **0 156 346**
**B1**

## EUROPEAN PATENT SPECIFICATION

(45) Date of publication of patent specification: **03.10.90**

(51) Int. Cl.⁵: **G 01 N 21/90**

(21) Application number: **85103495.9**

(22) Date of filing: **25.03.85**

(54) **Method and apparatus for detecting inferior container.**

(30) Priority: **30.03.84 JP 62663/84**

(43) Date of publication of application:
**02.10.85 Bulletin 85/40**

(45) Publication of the grant of the patent:
**03.10.90 Bulletin 90/40**

(84) Designated Contracting States:
**AT BE CH DE FR GB IT LI NL SE**

(56) References cited:
**EP-A-0 069 061**
**FR-A-2 080 561**
**US-A-3 814 946**
**US-A-4 025 201**
**US-A-4 310 250**

**PATENT ABSTRACTS OF JAPAN, vol. 5, no. 150
(P-81)822r, 22nd September 1981; & JP - A - 56
81439 (TOKYO SHIBAURA DENKI K.K.) 03-07-
1981**

(73) Proprietor: **Eisai Co., Ltd.
6-10, Koishikawa 4-chome Bunkyo-ku
Tokyo 112 (JP)**

(72) Inventor: **Tagaya, Ryosaku
No. 79-1, Gedouji-cho
Isesaki-shi Gunma-ken (JP)**

(74) Representative: **Hoffmeister, Helmut, Dr. Dipl.-
Phys.
Patentanwalt Goldstrasse 36
D-4400 Münster (DE)**

(56) References cited:
**PATENT ABSTRACTS OF JAPAN, vol. 2, no. 56
(E-78), 24th April 1978, page 1505 E 78; & JP - A -
53 21974 (MITSUBISHI DENKI K.K.) 28-02-1978**

**PATENT ABSTRACTS OF JAPAN, vol. 2, no. 26
(E-77), 26th February 1978, page 11887 E 77; &
JP - A - 52 146 685 (MITSUBISHI DENKI K.K.)
06-12-1977**

**PATENT ABSTRACTS OF JAPAN, vol. 2, no. 56
(E-78), 24th April 1978, page 1506 E 78; & JP - A -
53 21977 (MITSUBISHI DENKI K.K.) 28-02-1978**

## Description

The present invention relates to a method and an apparatus for detecting defective containers among transparent or semitransparent containers using incident light beams directed onto the containers and received by an optical detecting device, said containers are rotated on a support table in the optical paths of the light beams and have one or two of the following optically active areas

kind a) stained opaque areas,

kind b) scattering areas, like bubbles or flaws in the container material.

Description of the Prior Art

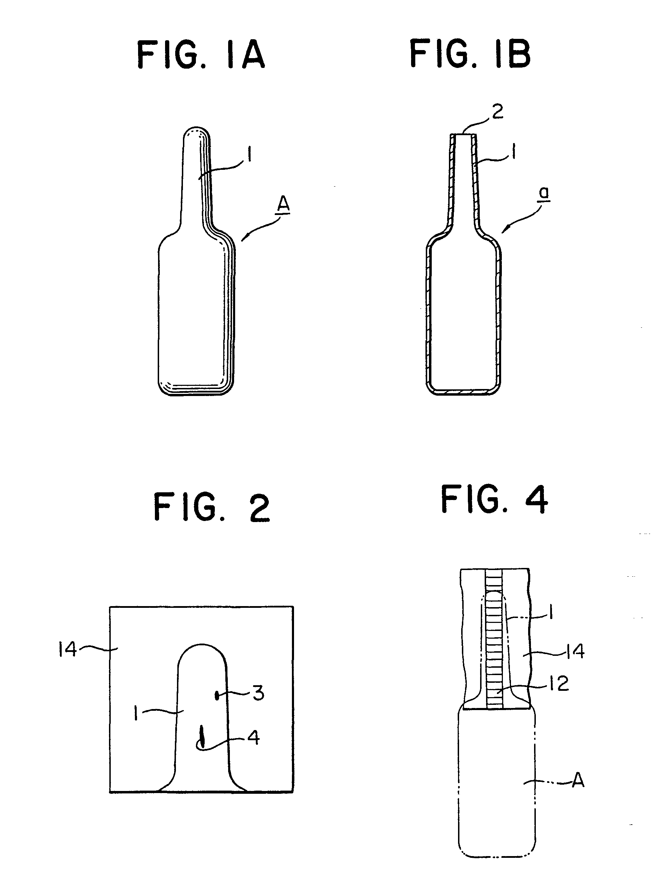

Figs. 1A and 1B show an ampulla (container) having an opening 2 at its portion 1. The ampulla will be filled with a solution or a solid substance through the opening 2. After this, the opening 2 is sealed by melting the glass at the top portion 1 (Fig. 1A).

During and after the filling, there may occur problems such as: the solution running out a filling nozzle (not shown) is spilled, when the filling nozzle touches an inner wall of the ampulla, or is spilled by other reasons. The spilled drops will adhere at the inner wall of the portion 1 and will be burned and carbonized when the melting and sealing operation is performed. This will lead to dark spots at the inner wall. In addition, other problems may occur, e.g., a stain adheres to the inner wall of the collar of the ampulla or the solution contains foreign matter. Consequently, a container having said defects should be removed.

In detecting of defective containers, a white board is placed behind the ampulla A which is subjected to an overhead illumination, while the ampulla 1 is visually inspected. This conventional detecting method gives no repeatable results due to differences in experience, sensitivity and endurance of the operator while the detecting accuracy itself is low. Further, the conventional detecting method is inefficient.

Consequently, the inventor of the present invention first intended to eliminate said deficiencies. He proposed to dispose a light source at the side of the ampulla. A light beam from the light source was projected through a diffusion plate to the side of the ampulla. Light beams penetrating the ampulla are received and detected by a photo sensor, which indicated shadows produced by dark spots, i.e. stained opaque areas. Said shadows were converted into an electric signal. By an electrical processing circuit defective containers were detected.

However, in a conventional detecting apparatus, flaws, bubbles and the like, which occur during the manufacturing process of the ampulla produce a shadow 4. These defects are harmless in use, but are detected by the photo sensor 14 together with the shadow 3 as shown in Fig. 2. The result is that the ampulla A which in fact is not defective, is removed using the conventional detection method. Since the amount of ampullas A which have only flaws and bubbles will extend to about 5 to 15% of the whole amount of the ampullas, an economic loss is unavoidable.

However, also automatical or semi-automatical optical sorting systems are known in the prior art.

JP—A—53 21 974 shows a method for inspecting glass bottles in which the body of the glass bottle or the like is divided into a plurality of inspection regions. A scanning effect is made through rotating mirrors. This known system therefore uses two different beams for different areas. The beams do not fall upon the same areas. The beams do not distinguish between different kinds of optically active areas.

JP—A—56 81 439 shows a detection apparatus for paper leaves. The light from two kinds of light sources is applied by a penetrating and a reflecting light beam. However, the field of technique is far different. The penetrating light beam detects deficiencies like thin paper or holes, whereas the reflecting beam detects defects like stains, dark areas etc. Both kinds of defects will lead to a signal. The signals, however, will not be mixed or taken to distinguish several kinds of defects, e.g., by subjecting or adding one signal to the other.

Summary of the Invention

It is an object of the present invention to provide an accurate and efficient sorting method which may eliminate the deficiencies of the prior art. The invention should allow to distinguish between black spots, e.g. opaque areas on the inner surface, from harmless flaws and bubbles in the material of the container.

This object is accomplished by a method, characterized in that

— at least two light beams having different incident angles ae directed onto the same area of the container,

— one of said light beams travel directly through the container and is partially extinguished by the optically active areas of kind a) and b) thereby producing lower signals at certain areas of the optical detecting device, characteristical for the optically active areas of kind a) and b),

— the other of said light beams travels in a direction inclined to the direction of said first beam producing scattered light by falling on the optically active areas of kind b), there at least partially enhancing the low signal characteristical for the optically active area of kind b) produced by the said one beam,

— and making thereby the signal distinguishable from signals characteristical to optically active areas of kind a)

— and sorting out those containers showing optically active areas of kind a).

In the method described above, the transmitted beam may also be diffused by a diffusion plate before reaching the container.

It should be noted that it is known (JP—A—52 146 685) to use the effect of direct travelling and scattering light. However, the different signals are not used for distinguishing optically active areas as mentioned above.

Another object of the present invention is to provide an apparatus that may detect automatically, accurately, efficiently and repeatably defective containers of the kind mentioned above.

This object is accomplished by an apparatus having a rotatable support for a transparent or semitransparent container, a light source generating a first light beam travelling on a first path directly through the container and an optical detection device receiving said first light beam having travelled through the receptacle, characterized in that from said light source or from a second source at least one light beam is derived, which travels on a light path inclined to said first path and generating scattered light at scattered areas in the container material, said scattered light to be received by said optical detection device.

Advantageously, two beams are simultaneously projected from two light sources disposed at different angles to the side of the test container. The latter is placed on a rotatable support. One beam travels through the container to become a transmitted beam, the other beam is reflected from the container to become a reflected beam. Both resultant beamns are simultaneously projected onto the common light-receptive surface whereby the low signal produced by the harmless flaw is enhanced or eliminated by the reflected beam. Thereby, the signal is distinguishable from signal characteristical to stained opaque areas, enabling the apparatus to detect automatically, accurately and efficiently the deficient containers, i.e., the containers having a stained opaque area.

In the apparatus of the present invention advantageously a diffusion plate is interposed between the first light source and the container. Further, first and second light beam may be derived from one common source by means of a reflecting plate.

DESCRIPTION OF THE DRAWINGS

Fig. 1A is a front view of an ampulla as a typical example of the container to be inspected;

Fig. 1B is a longitudinal sectional front view of an empty, open ampulla;

Fig. 2 is a view showing the partial image of a container with optically active areas;

Fig. 3 is a schematical design of a first embodiment of the detection apparatus;

Fig. 4 is a view showing the relative position of the photo sensor of the first embodiment and the ampulla;

Fig. 5 is a schematical design of a second embodiment of the detection apparatus;

Fig. 6 is a schematical design of the third embodiment of the detection apparatus;

Fig. 7 is a diagram showing the amplitude of the signal from the photo sensor converted from the image shown in Fig. 2;

Fig. 8 is a view showing the image received the photo-receptive member, exclusively by the reflected beam from the ampulla with the properties of Fig. 2;

Fig. 9 is a diagram showing the amplitude of signal from the photo sensor converted from the image shown in Fig. 8;

Fig. 10 is a view showing the image received by the photo-receptive member, with the reflected and scattered beam from the ampulla;

Fig. 11 is a diagram showing the amplitude of signal by the photo sensor converted from the image shown in Fig. 10.

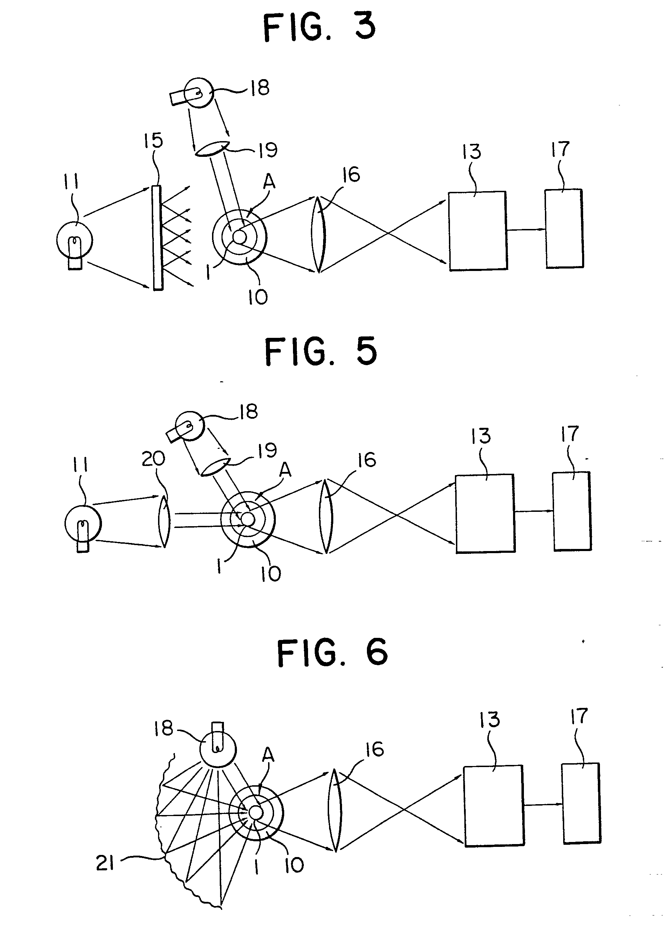

In the embodiment shown in Fig. 3, number 10 designates a rotary support, on which a test ampulla A is placed. The support 10 is rotatably driven by a driving unit (not shown). At the side of the table 10 a first light source is arranged opposite to an optical detection device 13, said device arranged in a row on a straight line passing through the light source 11 and the rotary support 10.

As shown in Fig. 4, a part of said optical detection device 13 is a photo sensor 14 having a light-receptive surface 12 divided longitudinally into a plurality of segments. The photo sensor 14 converts the intensity of light from an image projected upon the light-receptive surface 12 into an electrical signal. A diffusion plate 15 is interposed between the rotary support 10 and the light source 11. The diffusion plate 15 is made e.g. of a frosted glass. The diffusion plate enhances the picture of the ampulla. The diffusion plate 15 may be constructed of a suitable material; other materials than the frost glass mentioned above are known to the expert.

The resultant diffused beam falls upon the ampulla A. A focusing lens 16 is interposed between the rotary support 10 and the optical detection device 13. A processing circuit 17 receives the electric signal and distinguishes between bad and normal ampullas A. From the process circuit 17 an appropriate signal is sent to a discharging unit, which eliminates defective containers.

Number 18 designates a second light source disposed at a position different from that of the light source in substantially same plane. A lens 19 is interposed between the second light source 18 and the rotary support 10.

The operation performed by the described first embodiment is as follows: First, the ampulla A is placed on the rotary support 10. Then the two light beams are directed onto the ampulla A from both of the light sources 11 and 18 through the diffusion plate 15 and the lens 19, respectively, while the rotary support 10 is rotated.

The beam coming from the first source 11 travels through the ampulla A after being diffused by the diffusion plate 15 and is falling onto the ampulla A substantially uniformly. It becomes a transmitted beam falling onto the light-receptive surface 12 of the photo sensor 14 of the optical detection device 13 through the lens 16. It produces the image of the ampulla A on the light-receptive surface 12. If only said first transmitted beam would fall onto the surface 12 of the photo sensor 14, the image formed on the surface 12 would be an image similar to that shown in Fig. 12. This image consists of the shadow 4 of the harmless flaw together with the shadow 3 of the stain.

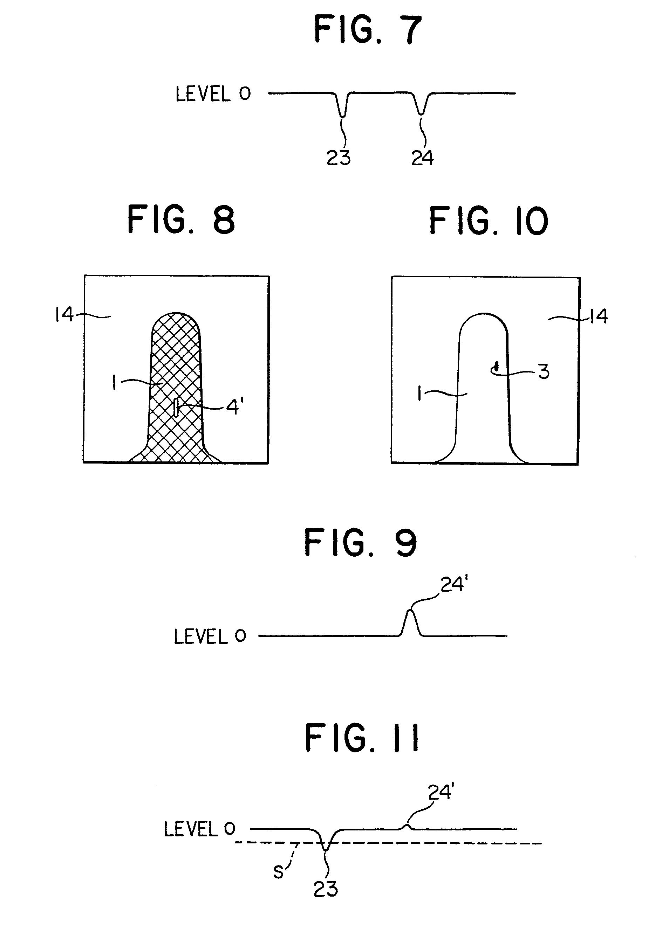

This image is converted into the electric signal of which a diagram is shown in Fig. 7. The amplitude of the electric signal has two minus-peaks 23 and 25 corresponding to the shadows 3, 4. Level 0 corresponds to the undisturbed beam.

Further, a second light beam coming from the second light source 18 is reflected from the ampulla A and becomes a reflected beam. This beam falls onto the surface 12 of the photo sensor 14 through the lens 16 together with a transmitted beam. It produces an image of the ampulla A. If only the reflected beam would fall onto the surface 12 of the photo sensor 14, the intensity of the light reflected from a harmless flaw and the like of the ampulla A would be stronger than the intensity of that light being reflected from another portion of the ampulla A. The harmless flaw therefore produces a bright image 4' in contrast with the other portions of the ampulla A giving a dark image as shown in *Fig. 8*. When the image of the flaw is converted into electric signals by the photo sensor 14 as shown in Fig. 9, the electric signals result in a curve where the portion corresponding to the bright spot 4' appears as a Plus-Peak 24'.

Since the transmitted beam and the reflected beam are falling simultaneously onto the optical detection device 13, the images or curves shown in Figs. 7 and 8 add to each other, whereby the low peak 24 is eliminated by a high peak 24'. As only the image shown in Fig. 10 is received on the surface 12 of the photo sensor 14, a signal as shown in Fig. 11 is accomplished, where the peaks 24, 24' are eliminated. There is no signal other than the peak 23.

When a standard level "s" is predetermined in the photo sensor 14 which level "s" enables the apparatus to detect the defective container, the ampulla A producing the peak 23 having a level lower than the standard level "s" is recognised as a defective container.

Since the processing circuit 17 is provided in this embodiment, it is possible to indicate and/or to remove the defective containers by actuating an indicator and/or a discharging unit (both not shown), by means of the processing circuit 17 when the circuit 17 receives the signal showing the defective container.

Since the reflected beam has a lower intensity than the transmitted beam, it is necessary to adjust the balance of the intensities of the transmitted beam and the reflected beam.

Since the second and the third embodiments of the present invention are substantially similar to the first embodiment of the present invention, like parts are designated with like reference numbers as in the first embodiment. Parts different from those of the first embodiment will be emphasized.

Fig. 5 shows a second embodiment. A lens 20 is fixed in place of the diffusion plate 15 of the first embodiment. The lens 20 projects a parallel beam onto the ampulla A.

Fig. 6 shows a third embodiment. The lamp 11 employed in the first and the second embodiments is removed, and reflection plate 21 is fixed in lieu of the diffusion plate 15, which reflection plate 21 has the same effect as that of the diffusion plate 15.

**Claims**

1. A method for sorting transparent or semi-transparent containers using incident light beams directed onto the containers and received by an optical detecting device, said containers are rotated on a support table in the optical path of the light beams and have one or two of the following optically active areas

kind a) stained opaque areas,

kind b) scattering areas, like bubbles or flaws in the container material characterized in that

— at least two light beams having different incident angles are directed onto the same area of the container,

— one of said light beams travels directly through the container and is partially extinguished by the optically active areas of kind a) and b) thereby producing lower signals at certain areas of the optical detecting device, characteristical for the optically active areas of kind a) and b),

— the other of said light beams travels in a direction inclined to the direction of said first beam producing scattered light by falling on the optically active areas of kind b), thereby at least partially enhancing the low signal characteristical for the optically active area of kind b) produced by the said one beam,

— and making thereby the signal distinguishable from signals characteristical to optically active areas of kind a)

— and sorting out those containers showing optically active areas of kind a).

2. A method according to claim 1, characterized in that at least one of the light beams is diffused before reaching the container.

3. Apparatus for performing the method of claim 1 having a rotatable support for a transparent or semitransparent container, a light source generating a first light beam travelling on a first path directly through the container and an optical detection device receiving said first light beam having travelled through the receptacle, characterized in that from said light source or from a second source at least one light beam is derived, which travels on a light path inclined to said first path and generating scattered light at scattering areas in the container material, said scattered light to be received by said optical detection device.

4. Apparatus according to claim 3 characterized in that a diffusion plate (15) is interposed between the first light source and the container.

5. Apparatus according to claim 3 or 4, characterized in that first and second light beams are derived from a common source by means of a reflecting plate (21).

## Patentansprüche

1. Verfahren zum Klassieren durchsichtiger oder halbdurchsichtiger Behälter unter Verwendung von einfallenden Lichtstrahlen, die auf die Behälter gerichtet und durch einen optischen Sensor aufgefangen werden, bei der die Behälter auf einem Support in der optischen Bahn der Lichtstrahlen gedreht werden und einen oder zwei der folgenden optisch aktiven Bereiche besitzen:
Art a) verschmutzte, undurchsichtige Bereiche,
Art b) Streubereiche, wie Blasen oder Mängel im Behältermaterial,
gekennzeichnet dadurch, daß
— wenigstens zwei Lichtstrahlen mit verschiedenen Einfallswinkeln auf denselben Bereich des Behälters gerichtet werden,
— einer der genannten Lichtstrahlen direkt den Behälter durchquert und teilweise durch die optisch aktiven Bereiche der Art a) und b) gelöscht wird, wobei schwächere Signale in gewissen Bereichen des optischen Sensors erzeugt werden, die charakteristisch sind für die optisch aktiven Bereiche der Art a) und b),
— sich der andere der genannten Lichtstrahlen in einer Richtung bewegt, die zu der Richtung des ersten besagten Lichtstrahls im Winkel verläuft und Streulicht erzeugt, wenn er auf optisch aktive Bereiche der Art b) fällt, wodurch zumindest teilweise das für die optisch aktiven Bereiche der Art b) charakteristische schwache Signal verstärkt wird, das durch den genannten Strahl produziert wird,
— wodurch das Signal unterscheidbar wird von Signalen, die für optisch aktive Bereiche der Art a) charakteristisch sind,
— und diejenigen Behälter aussortiert werden, die optisch aktive Bereiche der Art a) aufweisen.
2. Verfahren nach Anspruch 1, dadurch gekennzeichnet, daß zumindest einer der Lichtstrahlen gestreut wird, befor er den Behälter erreicht.
3. Vorrichtung zur Durchführung des Verfahrens nach Anspruch 1, die über folgende Teile verfügt: einen drehbaren Support für durchsichtige oder halbdurchsichtige Behälter, eine Lichtquelle, die einen ersten Lichtstrahl erzeugt, der auf einer ersten Bahn direkt durch den Behälter läuft, und eine optische Spürvorrichtung, die den besagen ersten Lichtstrahl auffängt, nachdem dieser durch den Behälter gelaufen ist, dadurch gekennzeichnet, daß von der genannten Lichtquelle oder von einer zweiten Quelle zumindest ein Lichtstrahl abgeleitet wird, der entlang einer Lichtbahn läuft, die zu der ersten Bahn im Winkel verläuft und in Streubereichen im Behältermaterial Streulicht erzeugt, das von einer optischen Spürvorrichtung aufzufangen ist.
4. Vorrichtung nach Anspruch 3, dadurch gekennzeichnet, daß eine Diffusionsscheibe (15) zwischen der ersten Lichtquelle und dem Behälter gesetzt wird.

5. Vorrichtung gemäß Anspruch 3 oder 4, dadurch gekennzeichnet, daß der erste und der zweite Lichtstrahl von einer gemeinsamen Quelle mittels einer reflektierenden Platte (21) abgeleitet werden.

## Revendications

1. Procédé de tri de récipients transparents ou semi-transparents par utilisation de faisceaux lumineux incidents dirigés sur les récipients et reçus par un dispositif de détection optique, les récipients étant entraînés en rotation sur une table de support sur le trajet optique des faisceaux lumineux et ayant des zones optiquement actives de l'un ou des deux types suivants:
a) zones opaques tachées,
b) zones diffusantes telles que les bulles et les défauts du matériau du récipient,
caractérisé en ce que
— deux faisceaux lumineux au moins ayant des angles d'incidence différents sont dirigés sur la même région du récipient,
— l'un des faisceaux lumineux passe directement à travers le récipient et subit une extinction partielle par les zones optiquement actives de type a) et de type b) avec création de signaux réduits dans certaines zones du dispositif de détection optique, caractéristiques des zones optiquement actives des types a) et b),
— l'autre des faisceaux lumineux se propage en direction inclinée par rapport à la direction du premier faisceau et produit une lumière diffusée lorsqu'il tombe sur les zones optiquement actives de type b), si bien que le faible signal caractéristique de la zone optiquement active de type b) produit par le premier faisceau est au moins partiellement accentué,
— le signal étant rendu distinct des signaux caractéristiques des zones optiquement actives du type a), et
— le tri des récipients ayant les zones optiquement actives de type a).
2. Procédé selon la revendication 1, caractérisé en ce que l'un au moins des faisceaux lumineux est diffusé avant d'atteindre le récipient.
3. Appareil destiné à la mise en oeuvre du procédé de la revendication 1, ayant un support rotatif destiné à supporter un récipient transparent ou semi-transparent, une source lumineuse créant un premier faisceau lumineux qui se propage sur un premier trajet passant directement à travers le récipient et un dispositif de détection optiquement recevant le premier faisceau lumineux qui a traversé le récipient, caractérisé en ce qu'au moins un faisceau lumineux est dérivé de la source lumineuse ou d'une seconde source et se propage suivant un trajet incliné par rapport au premier trajet et crée de la lumière diffusée dans des zones diffusantes du matériau du récipient, la lumière diffusée étant destinée à être reçue par le dispositif de détection optique.
4. Appareil selon la revendication 3, caractérisé en ce qu'une plaque diffusante (15) est placée entre la première source lumineuse et le récipient.

5. Appareil selon la revendication 3 ou 4, caractérisé en ce que le premier et le second faisceau lumineux sont dérivés d'une source commune à l'aide d'une plaque réfléchissante (21).

# FIG. IA

# FIG. IB

# FIG. 2

# FIG. 4

# FIG. 3

# FIG. 5

# FIG. 6

# FIG. 7

LEVEL 0

23    24

# FIG. 8

14

1

4'

# FIG. 10

14

1

3

# FIG. 9

LEVEL 0

24'

# FIG. 11

LEVEL 0

24'

S    23